# EUROPEAN PATENT APPLICATION

(11) **EP 4 477 436 A1**
(43) Date of publication of application: **18.12.2024**
(21) Application number: 24173336.9
(22) Date of filing: 30.04.2024
(51) Int. Cl.: B60K 1/04, B60L 50/60, H01M 50/249, H01M 50/244, H01M 50/262, H01M 50/242

(54) **A BATTERY MODULE ASSEMBLY AND AN ELECTRICALLY POWERED MACHINE**

(30) Priority: 10.05.2023 EP 23172492
(71) Applicant: VOLVO TRUCK CORPORATION, 405 08 Göteborg (SE)
(72) Inventor: Lindelöw, Fredrik, 541 94 Skövde (SE)
(74) Representative: Valea AB

(57) **Abstract**

A battery module assembly (3) for an electrically powered machine (4), the battery module assembly (3) comprising a module-receiving compartment (1) and a battery module (2) accommodated in the module-receiving compartment (1), wherein the module-receiving compartment (1) comprises threaded fixation elements (16) extending in threaded engagement through at least part of a plurality of through-holes (14), each fixation element (16) having an abutment end (18) configured to abut and engage a respective part of the battery module (2) accommodated in the module-receiving compartment (1), the fixation elements (16) being configured to fix the battery module (2) in clamping engagement between the at least a first and a second support elements (10, 12), the battery module (2) being fixed between the first and second support elements (10, 12) solely by the abutment ends (18) of the fixation elements (16).

## Description

### TECHNICAL FIELD

The disclosure relates generally to battery module assemblies. In particular aspects, the disclosure relates to a module-receiving compartment, a battery module, a battery module assembly and an electrically powered machine comprising the battery module assembly. The disclosure can be applied to heavy-duty vehicles, such as trucks, buses, and construction equipment, among other vehicle types or to stationary machinery. Although the disclosure may be described with respect to a particular vehicle or machinery, the disclosure is not restricted to any particular vehicle or machinery.

### BACKGROUND

Battery modules, especially in electric vehicles, are exposed to vibrations and therefore need rigid fixation. With increased lengths of modules come increased number of fixations needed to ensure fixation. The fixation needs to be adapted for manufacturing. As such, the battery modules need to be fast and reliable to assemble.

Long battery modules can be complicated to fixate in that a large number of fixation holes and bolts need to be lined up in an exact position in relation to each other, increasing tolerance chains in manufacturing.

### SUMMARY

According to a first aspect of the disclosure, there is provided a battery module assembly for an electrically powered machine. The battery module assembly comprises a module-receiving compartment configured to accommodate at least one battery module. The module-receiving compartment has a first width, a first length, and a first height. The module-receiving compartment comprises at least a first and a second support element, each configured to be arranged along the first width, the first length and/or the first height and adapted to a second width, a second length, and/or a second height, respectively, of the at least one battery module to be accommodated in the module-receiving compartment. The at least first and second support elements are arranged on opposite sides of the module-receiving compartment and are configured to accommodate the at least one battery module therebetween. At least one of the first and second support elements comprises a plurality of threaded through-holes distributed across the respective first and/or second support elements. A battery module is accommodated in the module-receiving compartment. The battery module has a second width, a second length, and a second height, and comprises at least one battery cell at least partly enclosed in a battery module casing.

The module-receiving compartment comprises threaded fixation elements extending in threaded engagement through at least part of the plurality of through-holes. Each fixation element has an abutment end configured to abut and engage a respective part of the battery module accommodated in the module-receiving compartment. The fixation elements are configured to fix the battery module in clamping engagement between the at least first and second support elements. The battery module is fixed between the first and second support elements solely by the abutment ends of the fixation elements (16).

The first aspect of the disclosure may seek to provide an improved fixation solution that can be applied without the need to line up all fixation holes in an exact position in relation to each other. A technical benefit may include the possibility to use an increased number of fixation points without increasing the tolerance chain. Since the battery module is fixed between the first and second support element solely by the abutment ends of the fixation elements is herein to be understood to mean that it is not necessary to further fix the battery module with other holding elements. No additional covers, bars, or clamps are needed to hold the battery module on place.

The first and second support elements may be provided as rails or plates on opposite sides of the module-receiving compartment, the rails or plates being dimensioned to be able to carry and support the load of a battery module to be accommodated in the module-receiving compartment. Such rails or plates may extend along the first width, the first length and the first height. The extensions of the first and second support elements may define the size of the module-receiving compartment in at least two dimensions. The extensions of the first and second support elements are adapted to a second width, a second length and/or a second height of the at least one battery module to be accommodated in the module-receiving compartment such that the plurality of threaded through-holes may be positioned freely, in a predetermined manner, across a surface of the battery module to be accommodated in the module-receiving compartment. It may be of particular benefit to position the threaded through-holes along a longest extension of the battery module, such as along a second length of the battery module.

The fixation elements are threaded to extend in threaded engagement through respective threaded through-holes. Each fixation element has an abutment end configured to abut and engage a respective part of the battery module to be accommodated in the module-receiving compartment. As such, the fixation elements do require exact alignment with any receiving holes of the battery module, thereby eliminating tolerance chains in manufacturing and assembly.

The first aspect of the disclosure allows accommodation of any battery modules in the module receiving compartment, which battery modules have a battery module casing which may receive the abutment ends of the fixation elements. Thereby, the solution according to the first aspect of the disclosure may be applied to existing battery modules.

Optionally in some examples, including in at least one preferred example, both the first and the second support elements may comprise a plurality of threaded through-holes and the threaded fixation elements may extend in threaded engagement through at least part of the plurality of through-holes of both the first and second support elements. The threaded fixation elements may be configured to fix the battery module in clamping engagement between the at least first and second support elements. A technical benefit may include that the fixation elements abut the battery module from two sides. Each fixation element being able to achieve a sufficient abutting engagement with the battery module. In addition, the position of the battery module may be adjusted by adjusting the fixation elements, which allows a greater tolerance, where the fixation elements will compensate for the tolerance.

Optionally in some examples, including in at least one preferred example, one of the first and the second support elements comprises a plurality of threaded through-holes. The threaded fixation elements may extend in threaded engagement through at least part of the plurality of through-holes of the one of the first and second support elements. The threaded fixation elements may be configured to fix the battery module in clamping engagement between the at least first and second support elements. A technical benefit may include that the fixation elements only need to be fixed from one direction of the battery module. The other side of the battery module may be pressed against the other of the first and second support elements. Thereby, the battery module will always be fixed in the same position when accommodated in the module-receiving compartment.

Optionally in some examples, including in at least one preferred example, the fixation elements may be provided with lock nuts arranged to prevent disengagement of the abutment ends from the battery module, to keep the battery module in clamping engagement with the fixation elements when accommodated in the module-receiving compartment. A technical benefit may include reducing the need for maintenance, such as re-tensioning of the fixation elements.

Optionally in some examples, including in at least one preferred example, the abutment ends of the fixation elements may be provided with load-distributing elements, rotatable around a centre axis of the fixation elements and axially fixed to the abutment ends. The load-distributing elements being configured to distribute a load produced by engagement of the abutment ends of the fixation elements with the battery module across a larger area of the battery module as compared to a cross sectional area of the respective abutment end. A technical benefit may include being able to exert a greater load produced by engagement of the abutment ends of the fixation elements with the battery module without damaging or structurally compromising the battery module.

Optionally in some examples, including in at least one preferred example, the battery module casing of the battery module may be configured to be engaged by the abutment ends of the fixation elements when the battery module is accommodated in the module-receiving compartment. A technical benefit may include allowing accommodation of any battery modules in the module receiving compartment of the first aspect of the disclosure, which battery modules have a battery module casing which may receive the abutment ends of the fixation elements.

Optionally in some examples, including in at least one preferred example, the battery module casing may be provided with reinforcement structures along the second width, the second length and/or the second height of the battery module. The reinforcement structures may be arranged to receive the abutment ends of the fixation elements of the module-receiving compartment when the battery module is accommodated in the module-receiving compartment. A technical benefit may include being able to exert a greater load produced by engagement of the abutment ends of the fixation elements with the battery module without damaging or structurally compromising the battery module.

Optionally in some examples, including in at least one preferred example, the reinforcement structures may comprise a plurality of reinforced portions of the battery module casing. The reinforced portions may be distributed along the second width, the second length, and/or the second height of the battery module.

Optionally in some examples, including in at least one preferred example, the reinforcement structures may comprise brackets arranged on the battery module casing along the second width, the second length, and/or the second height of the battery module.

Optionally in some examples, including in at least one preferred example, at least a part of the threaded through-holes of the module-receiving compartment may be located in predetermined positions configured to reduce vibrations of the battery module assembly when in use in an electrically powered machine. A technical benefit may include reducing the need for maintenance, such as re-tensioning of the fixation elements.

Optionally in some examples, including in at least one preferred example, the predetermined positions may be pre-calculated, or determined by simulations, and/or determined by experiments. A technical benefit may include determining vibration mode shapes of the battery module assembly and positioning the threaded through-holes so as to effectively dampen any vibrations between the module-receiving compartment and the battery module accommodated therein.

According to a second aspect of the disclosure, there is provided an electrically powered machine comprising the battery module assembly according to anyone of the examples of the first aspect of the disclosure. The second aspect of the disclosure may provide an electrically powered machine which is simpler to manufacture and assemble and to maintain.

Optionally in some examples, including in at least one preferred example, the electrically powered machine is an electrically powered vehicle, e.g., a heavy-duty vehicle, such as a truck, a bus, and construction equipment, among other vehicle types.

Optionally in some examples, including in at least one preferred example, the electrically powered machine is an electrically powered stationary machine such as a drill, a mill, a conveyor and a rock crusher, among other machine types.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary vehicle according to an example.
**FIG. 2** is an exemplary top-down view of a module-receiving compartment according to an example.
**FIG. 3** is an exemplary side view of a module-receiving compartment according to an example.
**FIG. 4** is an exemplary side view of a module-receiving compartment according to an example.
**FIG. 5** is an exemplary detail view of a fixation element according to an example.
**FIG. 6** is an exemplary detail view of a fixation element according to an example.
**FIG. 7** is an exemplary detail view of a fixation element according to an example.
**FIG. 8** is an exemplary side view of a battery module according to an example.
**FIG. 9** is an exemplary detail view of reinforcement structures according to an example.
**FIG. 10** is an alternative view of the reinforcement structure of Fig. 9
**FIG. 11** is an exemplary detail view of reinforcement structures according to an example.
**FIG. 12** is an alternative view of the reinforcement structure of Fig. 11.
**FIG. 13** is an exemplary side view of a battery module assembly according to an example.
**FIG. 14** is an exemplary top-down view of threaded through-holes of the battery assembly according to an example.

### DETAILED DESCRIPTION

The detailed description set forth below provides information and examples of the disclosed technology with sufficient detail to enable those skilled in the art to practice the disclosure.

Battery modules installed in vehicles and stationary machines are exposed to vibrations and therefore need rigid fixation. Increased length of modules requires increased number of fixation elements, such as screws, needed to ensure adequate fixation. Conventionally, the screws need to be aligned with screw holes. An increased number of screws therefore leads to increased tolerance chains. Long battery modules may be particularly difficult to fixate. In manufacturing, the modules need to be fast and reliable to fixate and assemble.

In accordance with the present disclosure, there is provided a battery module assembly, comprising a module-receiving compartment and a battery module, which battery module assembly may solve the problem of long tolerance chains and achieve a fast and reliable fixation of the battery module in the module-receiving compartment and which is may be adapted to reduce vibrations.

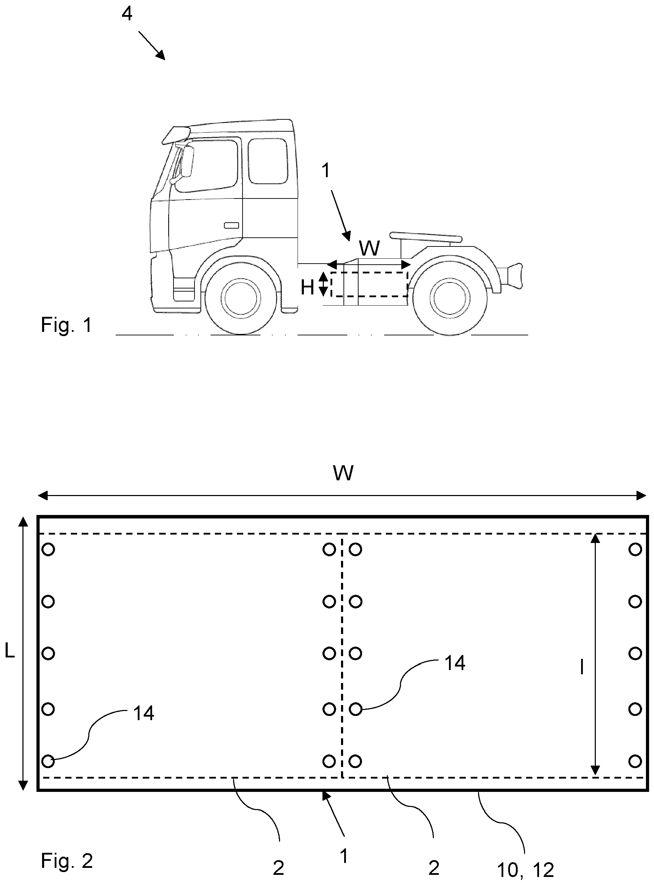

The present disclosure relates to a battery module assembly 3 comprising a module-receiving compartment 1 and a battery module 2 for an electrically powered machine 4. **Fig. 1** shows an example of an electrically powered machine 4, illustrated as a vehicle 4, or truck. The disclosure applies equally to electrically powered machines in the form of stationary machinery. An example module-receiving compartment 1 is outlined in dashed lines, showing a first width W and a first height H of the module-receiving compartment 1.

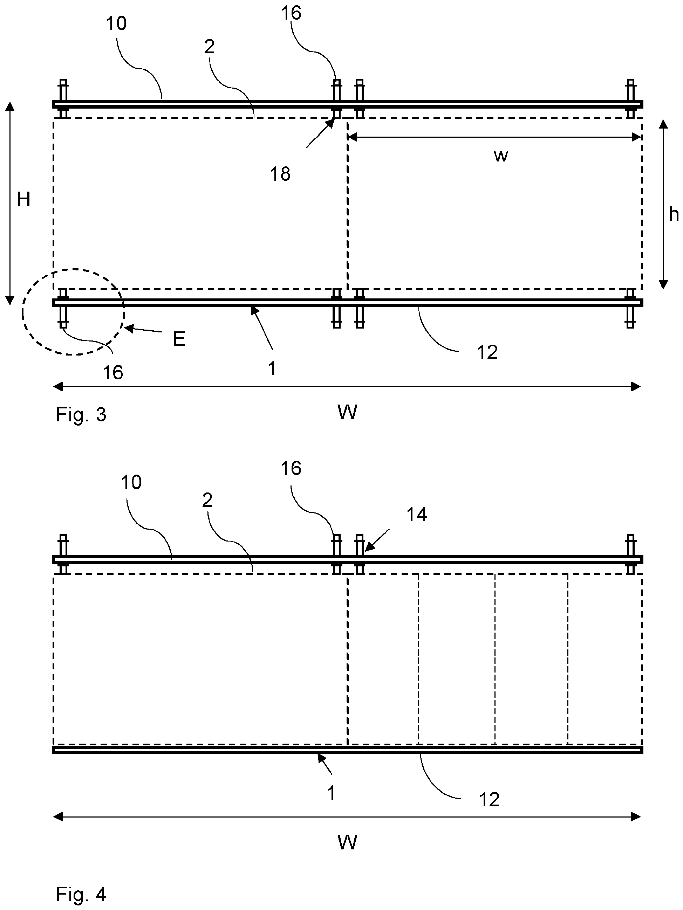

**Fig. 2** is a top-down view of the module-receiving compartment 1. The module-receiving compartment 1 is configured to accommodate at least one battery module 2. The module-receiving compartment 1 has a first width W, a first length L and a first height H. The first height H is not shown in **Fig. 2** due to top-down perspective of the figure. The module-receiving compartment 1 comprises at least a first and a second support element 10, 12, each configured to be arranged along the first width W, the first length L and/or the first height H and adapted to a second width w, a second length 1 and/or a second height h, respectively, of the at least one battery module 2 to be accommodated in the module-receiving compartment 1. For clarity, the second width w, the second length 1 and/or the second height h are instead represented in **Fig. 3****,** **Fig. 8** and **Figs 10****-14.** The at least first and second support elements 10, 12 are arranged on opposite sides of the module-receiving compartment 1 and configured to accommodate the at least one battery module 2 therebetween. At least one of the first and second support elements 10, 12 comprises a plurality of threaded through-holes 14 distributed across the respective first and/or second support elements 10, 12.

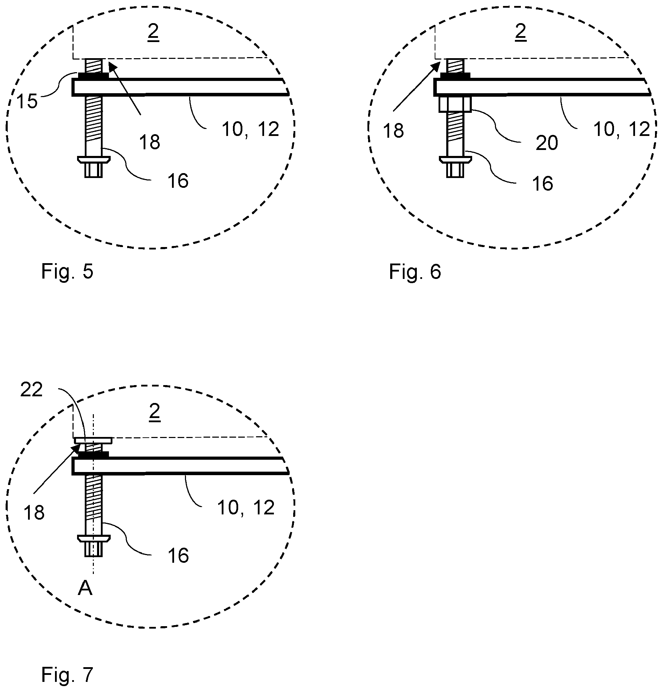

The module-receiving compartment 1 comprises threaded fixation elements 16 (see e.g. **Fig. 3**) extending in threaded engagement through at least part of the plurality of through-holes 14, each fixation element 16 having an abutment end 18 (see e.g. **Fig. 5**) configured to abut and engage a respective part of the battery module 2 to be accommodated in the module-receiving compartment 1.

The fixation elements 16 are configured to fix the battery module 2 in clamping engagement between the at least first and second support elements 10, 12.

**Fig. 2** shows the module receiving compartment 1 in solid lines. Two battery modules 2 accommodated in the module-receiving compartment 1 are shown in dashed lines. The first and second support elements 10, 12 may be provided as rails or plates on opposite sides of the module-receiving compartment 1, the rails or plates being dimensioned to be able to carry and support the load of a battery module 2 to be accommodated in the module-receiving compartment 1. Fig. 2 shows one of the first and second support elements 10, 12 as a plate extending along the first width W and the first length L. Such rails or plates may extend along the first width W, the first length L and/or the first height H. The extensions of the first and second support elements 10, 12 may define the size of the module-receiving compartment 1 in at least two dimensions. The support elements 10, 12 may be arranged in an available space of the electrically powered machine 4 according to any conventional means. The extensions of the first and second support elements 10, 12 are adapted to a second width w, a second length l and/or a second height h of the at least one battery module 2 to be accommodated in the module-receiving compartment 1 such that the plurality of threaded through-holes 14 may be positioned freely, in a predetermined manner, across a surface of the battery module 2 to be accommodated in the module-receiving compartment 1. It may be of particular benefit to position the threaded through-holes 14 along a longest extension of the battery module 2, such as along a second length l of the battery module 2.

The fixation elements 16 are threaded to extend in threaded engagement through respective threaded through-holes 14. Each fixation element 16 has an abutment end 18 configured to abut and engage a respective part of the battery module 2 to be accommodated in the module-receiving compartment 1. As such, the fixation elements 16 do require exact alignment with any receiving holes of the battery module 2, thereby eliminating tolerance chains in manufacturing and assembly.

As shown in **Fig. 3****,** both the first and the second support elements 10, 12 of the module-receiving compartment 1 comprise a plurality of threaded through-holes 14 and the threaded fixation elements 16 extend in threaded engagement through at least part of the plurality of through-holes 14 of both the first and second support elements 10, 12, and the threaded fixation elements 16 are configured to fix the battery module 2 in clamping engagement between the at least first and second support elements 10, 12. The fixation elements 16 thereby abut the battery module 2 from two sides. Each fixation element 16 is able to achieve an individual abutting engagement with the battery module.

Alternatively, as shown in **Fig. 4****,** (only) one of the first and the second support elements 10, 12 comprises a plurality of threaded through-holes 14. The threaded fixation elements 16 may extend in threaded engagement through at least part of the plurality of through-holes 14 of the one of the first and second support elements 10, 12. The threaded fixation elements 16 may be configured to fix the battery module 2 in clamping engagement between the at least first and second support elements 10, 12. Thereby, the fixation elements 16 may only need to be fixed from one direction of the battery module 2. The other side of the battery module 2 may be pressed against the other of the first and second support elements 10, 12. **Fig. 4** illustrates how the fixation elements 16 are arrange in through-holes 14 of the first support element 10 and how the battery module 2 is pressed against the second support element 12 by the fixation elements 16.

**Fig. 3** shows a detail view E of a fixation element 16 in threaded engagement with a through hole 14 (reference sign 14 not shown for clarity reasons) of the second support element 12. The detail view E may illustrate various alternative and complementary example features of fixation elements 16, the first and the second support elements 10, 12, and the battery module 2, in relation to aspects of the module-receiving compartment 1 or to the battery module 2. Detail view E will be further described in conjunction with **Figs 5-7**, 9 and 10.

**Fig. 5** illustrates a threaded fixation element 16 of the module-receiving compartment 1. The threads of the fixation element 16 may engage threads of, or associated with, the first or second support element 10, 12. The threads of the first and second support element 10, 12 may optionally be provided by a threaded nut 15 which may be fixed to the first and second support element 10, 12, on a battery module facing side of the first and second support element 10, 12, as shown in **Fig. 5****.** An abutment end 18 of the fixation element 16 is further shown in abutment with the battery module 2, which is shown in dashed lines since the battery module 2 is not considered to be an inherent part of the module-receiving compartment 1.

**Fig. 6** shows a detail view of a fixation element 16 provided with a lock nut 20 arranged to prevent disengagement of the abutment end 18 from the battery module 2 to keep the battery module 2 in clamping engagement with the fixation element 16 when accommodated in the module-receiving compartment 1. Lock nuts 20 may reduce the need for maintenance, such as re-tensioning of the fixation elements 16.

**Fig. 7** exemplifies how the abutment ends 18 of the fixation elements 16 may be provided with load-distributing elements 22, rotatable around a centre axis A of the fixation elements 16 and axially fixed to the abutment ends 18. The load-distributing elements 22 are configured to distribute a load produced by engagement of the abutment ends 18 of the fixation elements 16 with the battery module 2 across a larger area of the battery module 2 as compared to a cross sectional area of the respective abutment end 18. Thereby, a greater load may be applied by the fixation elements 16 without damaging or structurally compromising the battery module 2. Since the load-distributing elements 22 are rotatable, but axially fixed to the abutment ends 18 of the fixation elements 16, the load distributing elements stay on the fixation elements 16 and may be applied to any surface of the battery module 2 with reduced risk of damaging the surface.

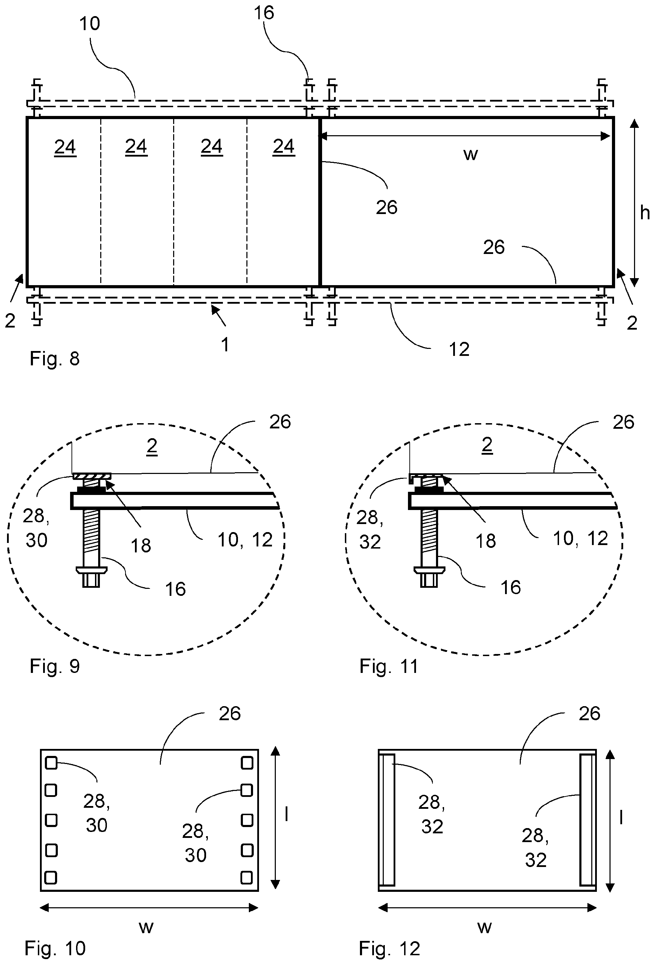

Two battery modules 2 are depicted in solid lines in **Fig. 8****.** However, one battery module 2 or more than two battery modules 2 could be accommodated in the module-receiving compartment 1. The module-receiving compartment 1 is shown in dashed lines since it is not considered an inherent part of a battery module 2. The battery modules 2 may be suitable (or configured) to be accommodated in the module-receiving compartment 1, as described hereinabove. The battery module 2 has a second width w, a second length l (not shown in **Fig. 8**), and a second height h, and may comprise at least one battery cell 24 at least partly enclosed in a battery module casing 26. One or more battery cells 24 constitute a battery module 2 and one or more battery modules 2 may constitute a battery pack.

The present disclosure allows accommodation of any battery modules 2 in the module receiving compartment 1, which battery modules 2 have a battery module casing 26 which may receive and support the abutment ends 18 of the fixation elements 16. In other words, the module-receiving compartment 1 may be suitable for many existing battery modules 2 without requiring any adaptation. As such, the battery module casing 26 of the battery module 2 may be suitable (or configured) to be engaged by the abutment ends of the fixation elements 16 when the battery module 2 is accommodated in the module-receiving compartment 1.

As shown in the example of **Fig. 9****,** the battery module casing 26 may be provided with reinforcement structures 28 along the second width w, the second length l and/or the second height h of the battery module 2. The reinforcement structures 28 may be arranged to receive the abutment ends 18 of the fixation elements 16 of the module-receiving compartment 1 when the battery module 2 is accommodated in the module-receiving compartment 1. The fixation elements 16 may thereby be tensioned to exert a greater load by the abutment ends 18 against the reinforcement structures 28 without damaging or structurally compromising the battery module 2, securing a more reliable fixation of the battery module 2 in the module-receiving compartment 1.

The reinforcement structures 28 may comprise a plurality of reinforced portions 30 of the battery module casing 26, as shown in **Fig. 9** and **Fig. 10****.** The reinforced portions 30 may be distributed along the second width w, the second length l, and/or the second height h of the battery module 2. The reinforced portions 30 may be locally reinforced portions of the battery module casing. Such locally reinforced portions 30 preferably have a sufficiently large area to receive the abutment ends 18 of the fixation elements 16 without affecting tolerance chains.

Alternatively, as shown in **Fig. 11** and **Fig. 12****,** the reinforcement structures 28 may comprise brackets 32, or rails, arranged on the battery module casing 26 along the second width w, the second length l, and/or the second height h of the battery module 2. Apart from reinforcing the battery module casing 26 to receive the abutment ends 18 of the fixation elements 16, such brackets 32, or rails, may be used to position the battery module 2 correctly in the module-receiving compartment 1 by sliding engagement with other structures (not shown) of the module-receiving compartment 1.

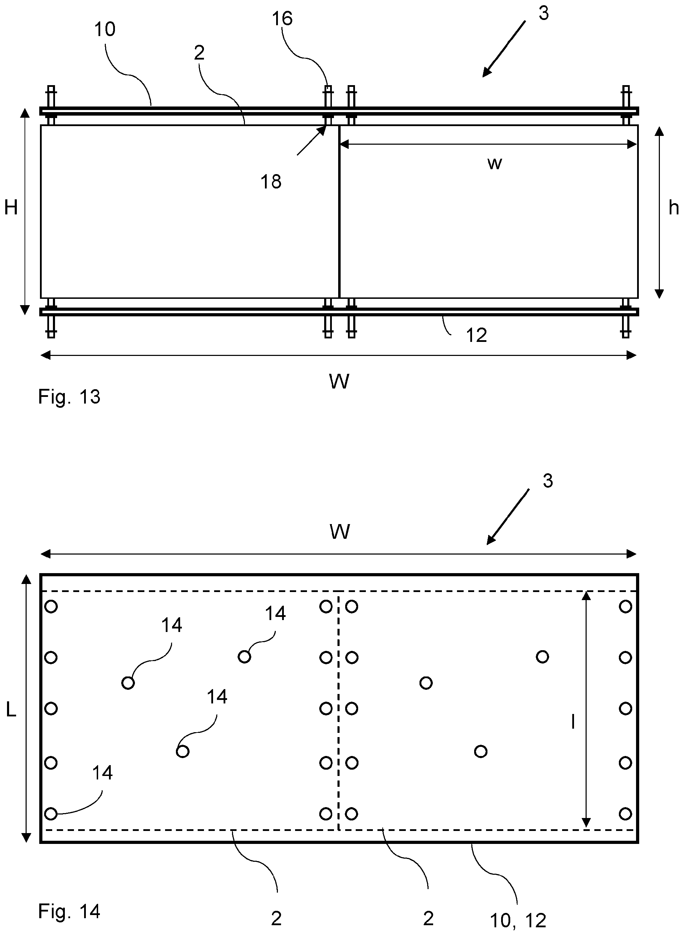

According to the first aspect of the present disclosure, there is provided a battery module assembly 3 for an electrically powered machine 4. As shown in **Fig. 13****,** the battery module assembly 3 comprises the hereinbefore described module-receiving compartment 1 and the battery module 2. The battery module 2 is accommodated in the module-receiving compartment 1 and is fixed by fixation elements 16. The battery module 2 is fixed between the first and second support elements 10, 12 solely by the abutment ends 18 of the fixation elements 16. Thereby, no other fixation devices, such as covers, bars, or clamps are necessary to hold the battery module 2 in place in the module-receiving compartment.

**Fig. 14** exemplifies how at least a part of the threaded through-holes 14 of the module-receiving compartment 1 may be located in predetermined positions configured to reduce vibrations of the battery module assembly 3 when in use in an electrically powered machine 4. By positioning the through-holes 14 and the fixation elements 16 in predetermined positions, vibrations may be effectively dampened. The present disclosure enables such positioning since added fixation elements do not contribute to increased tolerance chains.

The predetermined positions may be pre-calculated or determined by simulations, and/or determined by experiments. Determination of vibration mode shapes of the battery module assembly 3 may be used to position the threaded through-holes 14 (and fixation elements 16) so as to effectively dampen any vibrations between the module-receiving compartment and the battery module accommodated therein. As shown in the drawings, fixation elements 16 are preferably arranged along edges of the battery modules to fixate the modules in the module-receiving compartment 1. **Fig. 14** exemplifies that the predetermined positions to dampen vibrations may also be located away from the edges.

### Examples of the disclosure:

Example 1: A battery module assembly (3) for an electrically powered machine (4), the battery module assembly (3) comprising
a module-receiving compartment (1), being configured to accommodate at least one battery module (2), the module-receiving compartment (1) having a first width (W), a first length (L), and a first height (H), the module-receiving compartment (1) comprising at least a first and a second support element (10, 12), each configured to be arranged along the first width (W), the first length (L) and/or the first height (H) and adapted to a second width (w), a second length (l), and/or a second height (h), respectively, of the at least one battery module (2) to be accommodated in the module-receiving compartment (1), the at least first and second support elements (10, 12) being arranged on opposite sides of the module-receiving compartment (1), and configured to accommodate the at least one battery module (2) therebetween, at least one of the first and second support elements (10, 12) comprising a plurality of threaded through-holes (14) distributed across the respective first and/or second support elements (10, 12), and
a battery module (2) accommodated in the module-receiving compartment (1), the battery module (2) having a second width (w), a second length (l), and a second height (h), and comprising at least one battery cell (24) at least partly enclosed in a battery module casing (26), and
characterized in that the module-receiving compartment (1) comprises threaded fixation elements (16) extending in threaded engagement through at least part of the plurality of through-holes (14), each fixation element (16) having an abutment end (18) configured to abut and engage a respective part of the battery module (2) accommodated in the module-receiving compartment (1), and wherein the fixation elements (16) are configured to fix the battery module (2) in clamping engagement between the at least first and second support elements (10, 12), the battery module (2) being fixed between the first and second support elements (10, 12) solely by the abutment ends (18) of the fixation elements (16).

Example 2: The battery module assembly (3) of example 1, wherein both the first and the second support elements (10, 12) comprise a plurality of threaded through-holes (14) and wherein the threaded fixation elements (16) extend in threaded engagement through at least part of the plurality of through-holes (14) of both the first and second support elements (10, 12) and wherein the threaded fixation elements (16) are configured to fix the battery module (2) in clamping engagement between the at least first and second support elements (10, 12).

Example 3: The battery module assembly (3) of example 1, wherein one of the first and the second support elements (10, 12) comprises a plurality of threaded through-holes (14) and wherein the threaded fixation elements (16) extend in threaded engagement through at least part of the plurality of through-holes (14) of the one of the first and second support elements (10, 12) and wherein the threaded fixation elements (16) are configured to fix the battery module (2) in clamping engagement between the at least first and second support elements (10, 12).

Example 4: The battery module assembly (3) of anyone of examples 1-3, wherein the fixation elements (16) are provided with lock nuts (20) arranged to prevent disengagement of the abutment ends (18) from the battery module (2) to keep the battery module (2) in clamping engagement with the fixation elements (16) when accommodated in the module-receiving compartment (1).

Example 5: The battery module assembly (3) of anyone of examples 1-4, wherein the abutment ends (18) of the fixation elements (16) are provided with load-distributing elements (22), rotatable around a centre axis (A) of the fixation elements (16) and configured to distribute a load produced by engagement of the abutment ends (18) of the fixation elements (16) with the battery module (2) across a larger area of the battery module (2) as compared to a cross sectional area of the respective abutment end (16).

Example 6: The battery module assembly (3) of anyone of examples 1-5, wherein the battery module casing (26) of the battery module (2) is configured to be engaged by the abutment ends of the fixation elements (16) when the battery module (2) is accommodated in the module-receiving compartment (1).

Example 7: The battery module assembly (3) of anyone of examples 1-6, wherein the battery module casing (26) is provided with reinforcement structures (28) along the second width (w), the second length (l) and/or the second height (h) of the battery module (2), the reinforcement structures (28) being arranged to receive the abutment ends (18) of the fixation elements (16) of the module-receiving compartment (1) when the battery module (2) is accommodated in the module-receiving compartment (1).

Example 8: The battery module assembly (3) of example 7, wherein the reinforcement structures (28) comprise a plurality of reinforced portions (30) of the battery module casing (26), the reinforced portions (30) being distributed along the second width (w), the second length (l), and/or the second height (h) of the battery module (2).

Example 9: The battery module assembly (3) of example 7 or 8, wherein the reinforcement structures (28) comprise brackets (32) arranged on the battery module casing (26) along the second width (w), the second length (l), and/or the second height (h) of the battery module (2).

Example 10: The battery module assembly (3) according to anyone of examples 1-9, wherein at least a part of the threaded through-holes (14) of the module-receiving compartment (1) are located in predetermined positions configured to reduce vibrations of the battery module assembly (3) when in use in an electrically powered machine (4).

Example 11: The battery module assembly (3) according to example 10, wherein the predetermined positions are pre-calculated, determined by simulations, and/or determined by experiments.

Example 12: An electrically powered machine (4) comprising the battery module assembly (3) according to anyone of examples 1-11.

Example 13: The electrically powered machine (4) of example 12, wherein the electrically powered machine (4) is an electrically powered vehicle (4) or an electrically powered stationary machine (4).

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A battery module assembly (3) for an electrically powered machine (4), the battery module assembly (3) comprising
- a module-receiving compartment (1), being configured to accommodate at least one battery module (2), the module-receiving compartment (1) having a first width (W), a first length (L), and a first height (H), the module-receiving compartment (1) comprising at least a first and a second support element (10, 12), each configured to be arranged along the first width (W), the first length (L) and/or the first height (H) and adapted to a second width (w), a second length (l), and/or a second height (h), respectively, of the at least one battery module (2) to be accommodated in the module-receiving compartment (1), the at least first and second support elements (10, 12) being arranged on opposite sides of the module-receiving compartment (1), and configured to accommodate the at least one battery module (2) therebetween, at least one of the first and second support elements (10, 12) comprising a plurality of threaded through-holes (14) distributed across the respective first and/or second support elements (10, 12), and
- a battery module (2) accommodated in the module-receiving compartment (1), the battery module (2) having a second width (w), a second length (l), and a second height (h), and comprising at least one battery cell (24) at least partly enclosed in a battery module casing (26), and
**characterized in that** the module-receiving compartment (1) comprises threaded fixation elements (16) extending in threaded engagement through at least part of the plurality of through-holes (14), each fixation element (16) having an abutment end (18) configured to abut and engage a respective part of the battery module (2) accommodated in the module-receiving compartment (1), and wherein the fixation elements (16) are configured to fix the battery module (2) in clamping engagement between the at least first and second support elements (10, 12), the battery module (2) being fixed between the first and second support elements (10, 12) solely by the abutment ends (18) of the fixation elements (16).

2. The battery module assembly (3) of claim 1, wherein both the first and the second support elements (10, 12) comprise a plurality of threaded through-holes (14) and wherein the threaded fixation elements (16) extend in threaded engagement through at least part of the plurality of through-holes (14) of both the first and second support elements (10, 12) and wherein the threaded fixation elements (16) are configured to fix the battery module (2) in clamping engagement between the at least first and second support elements (10, 12).

3. The battery module assembly (3) of claim 1, wherein one of the first and the second support elements (10, 12) comprises a plurality of threaded through-holes (14) and wherein the threaded fixation elements (16) extend in threaded engagement through at least part of the plurality of through-holes (14) of the one of the first and second support elements (10, 12) and wherein the threaded fixation elements (16) are configured to fix the battery module (2) in clamping engagement between the at least first and second support elements (10, 12).

4. The battery module assembly (3) of anyone of claims 1-3, wherein the fixation elements (16) are provided with lock nuts (20) arranged to prevent disengagement of the abutment ends (18) from the battery module (2) to keep the battery module (2) in clamping engagement with the fixation elements (16) when accommodated in the module-receiving compartment (1).

5. The battery module assembly (3) of anyone of claims 1-4, wherein the abutment ends (18) of the fixation elements (16) are provided with load-distributing elements (22), rotatable around a centre axis (A) of the fixation elements (16) and configured to distribute a load produced by engagement of the abutment ends (18) of the fixation elements (16) with the battery module (2) across a larger area of the battery module (2) as compared to a cross sectional area of the respective abutment end (16).

6. The battery module assembly (3) of anyone of claims 1-5, wherein the battery module casing (26) of the battery module (2) is configured to be engaged by the abutment ends of the fixation elements (16) when the battery module (2) is accommodated in the module-receiving compartment (1).

7. The battery module assembly (3) of anyone of claims 1-6, wherein the battery module casing (26) is provided with reinforcement structures (28) along the second width (w), the second length (l) and/or the second height (h) of the battery module (2), the reinforcement structures (28) being arranged to receive the abutment ends (18) of the fixation elements (16) of the module-receiving compartment (1) when the battery module (2) is accommodated in the module-receiving compartment (1).

8. The battery module assembly (3) of claim 7, wherein the reinforcement structures (28) comprise a plurality of reinforced portions (30) of the battery module casing (26), the reinforced portions (30) being distributed along the second width (w), the second length (l), and/or the second height (h) of the battery module (2).

9. The battery module assembly (3) of claim 7 or 8, wherein the reinforcement structures (28) comprise brackets (32) arranged on the battery module casing (26) along the second width (w), the second length (l), and/or the second height (h) of the battery module (2).

10. The battery module assembly (3) according to anyone of claims 1-9, wherein at least a part of the threaded through-holes (14) of the module-receiving compartment (1) are located in predetermined positions configured to reduce vibrations of the battery module assembly (3) when in use in an electrically powered machine (4).

11. The battery module assembly (3) according to claim 10, wherein the predetermined positions are pre-calculated, determined by simulations, and/or determined by experiments.

12. An electrically powered machine (4) comprising the battery module assembly (3) according to anyone of claims 1-11.

13. The electrically powered machine (4) of claim 12, wherein the electrically powered machine (4) is an electrically powered vehicle (4) or an electrically powered stationary machine (4).
